# EUROPÄISCHE PATENTSCHRIFT

(11) **EP 1 932 975 B1**
(45) Veröffentlichungstag und Bekanntmachung des Hinweises auf die Patenterteilung: **28.04.2010**
(21) Anmeldenummer: 06026075.9
(22) Anmeldetag: 15.12.2006
(51) Int. Cl.: E03F 1/00

(54) **Versickerungskörper aus Kunststoff**
Plastic infiltration body
Corps d'infiltration en matière plastique

(43) Veröffentlichungstag der Anmeldung: 18.06.2008
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(56) Entgegenhaltungen:
- EP-A- 1 607 535
- US-A1- 2005 155 285

## Beschreibung

Die Erfindung betrifft einen Versickerungskörper gemäß Oberbegriff des Patentanspruchs 1.

Zur Entsorgung von beispielsweise bei einem Platzregen anfallendem Regenwasser von großen Dachflächen oder durch Straßen, Wege und dgl. versiegelten Bodenflächen ist es bekannt, aus Versickerungskörpern ein unterirdisches Versickerungsbauwerk zu erstellen, das als unterirdisches Sammelbecken zulaufseitig mit wenigstens einem Gully verbunden ist, Regenwasser aufnimmt, und zumindest einen Teil davon im Erdreich versickern lässt. Die nebeneinander und übereinander gesetzten Versickerungskörper sind wasserdurchlässig ausgebildet und werden zumindest durch eine Vliesumhüllung abgedeckt. Das Versickerungsbauwerk kann mit der weiterführenden Kanalisation verbunden sein.

Der aus EP 1 607 535 A bekannte Versickerungskörper ist ein rechteckiger Tisch mit durchgehenden Gitterstruktur-Stirnwandabschnitten an den beiden schmalen Stirnseiten des Tisches. Unter der Längsmitte sind an den Rechtecklängsseiten des Tisches zwei separate Tischbeine geformt, zwischen denen sich eine Bogenöffnung befindet. Weitere Bogenöffnungen liegen zwischen den Gitterstruktur-Stirnwandabschnitten und den beiden Tischbeinen vor. Die Tischbeine sind an den Außenseiten des Versickerungskörpers voll verkleidet, hingegen in den Bogenöffnungen und innen in der Kammer unverkleidet. Jeweils zwei mit den Tischbeinenden aneinander gesetzte Versickerungskörper bilden aus zwei zueinander weisenden Bogenöffnungen eine einzige runde Öffnung, die durch eine kreisrunde Gitterstruktur-Füllplatte ausgefüllt werden kann.

Ein aus US 2005/155285 A1 bekannter Versickerungskörper ist ein quadratischer Tisch mit separaten Tischbeinen unter den vier Tischecken und einem zentralen Tischbein. Die Versickerungskörper werden jeweils mit der Deckplatte nach unten aufeinander gestapelt und tragen oben eine weitere Deckplatte. In den quadratischen Deckplatten sind jeweils vier große quadratische Durchbrüche geformt, die im endgültig erstellten Bauwerk wie auch die Zwischenräume zwischen den Tischbeinen frei bleiben.

Der aus der Broschüre V26 EN "Stormwater Management" 2006/07 der Firma Otto Graf GmbH Kunststofferzeugnisse, 79331 Teningen, DE, Seiten 4 und 5, bekannte Versickerungskörper ist ein quaderförmiger Block mit Gitterstrukturen in allen Wandflächen und innenliegenden Stützsäulen zwischen der Deckplatte und einer Grundplatte.

Der aus EP 1 260 640 A bekannte Versickerungskörper ist in einer Ausführungsform als nach unten offener Korb ausgebildet, von dessen Deckplatte sich an zwei gegenüberliegenden Seitenränder Seitenwandabschnitte nach unten erstrecken, zwischen denen ein nach unten offener Kanalabschnitt ausgespart ist. Die Weite des Kanalabschnittes, der über die Länge des Versickerungskörpers durchgeht, beträgt in etwa ein Drittel der Länge des Versickerungskörpers. In den Hohlräumen zwischen dem Kanalabschnitt und den außenliegenden Seitenwandabschnitten sind senkrecht zur Deckwand verlaufende Stützsäulen integriert.

Der Erfindung liegt die Aufgabe zugrunde, einen Versickerungskörper der eingangs genannten Art anzugeben, der herstellungstechnisch einfach, hoch belastbar und in Versickerungsbauwerken universell mit weiteren kombinierbar ist.

Die gestellte Aufgabe wird mit den Merkmalen des Patentanspruchs 1 gelöst.

Die Tischform des Versickerungskörpers mit vier oder sechs Tischbeinen erbringt hohe Gestaltfestigkeit bei minimiertem Materialaufwand und ermöglicht die wahlweise Kombination mehrerer Versickerungskörper durch Aneinandersetzen und Aufeinanderstellen. Dank der hohe Stabilität leistenden Tischbeine wird ein sehr großer und vollständig freier Innenraum gebildet, und besteht aufgrund der vorgesehenen Bogenöffnungen die Möglichkeit, in einem Versickerungsbauwerk aus mehreren Versickerungskörpem Inspektionszugänge dort entweder frei zu lassen oder frei zu legen, wo dies für Inspektions- oder Reinigungsarbeiten erforderlich ist. Mehrere Versickerungskörper lassen sich ineinandergeschachtelt mit verminderten Transportabmessungen transportieren bzw. aufbewahren, sind bequem handhabbar und ermöglichen den modularen Aufbau beliebig gestalteter Versickerungsbauwerke. Die Herstellung aus Kunststoff lässt sich rational insbesondere im Spritzguss mit Backenwerkzeugen durchführen. Es wird ein nutzbares Volumen von z.B. 95 % oder mehr des umbauten Raumes erzielt. Die beiden Versickerungskörper-Grundtypen sind wahlweise miteinander kombinierbar und können gegebenenfalls in denselben Formwerkzeugen produziert werden. In zumindest eine der Bogenöffnungen ist eine die Bogenöffnung bis unten ausfüllende Gitterstruktur-Füllplatte nachträglich eingesetzt, die randseitig verkleidet und dort mit Schnapp- oder anderen Befestigungs-Elementen versehen ist. Dies wird vorzugsweise bei den Versickerungskörpem getan, die sich an der Außenseite des Versickerungsbauwerks befinden, um das umhüllende Vlies großflächig abzustützen. In den Bogenöffnungen und in der Innenkammer sind die Tischbeine ausgekleidet. Dies erhöht die Gestaltfestigkeit und ermöglicht das problemlose Einsetzen und Festlegen von Gitterstruktur-Füllplatten in den Bogenöffnungen.

Bei der Ausführungsform des Versickerungskörpers mit der Form eines rechteckigen Tisches sind zweckmäßig die Tischbeine unter den Längsmitten der Rechtecklängsseiten in etwa doppelt so breit wie die Tischbeine unter den Ecken. Dies dient zur Erhöhung der Stabilität, und hat formentechnische Vorteile (gegebenenfalls gleiche Produktionswerkzeuge für beide Tischtypen).

Bei einer Ausführungsform verläuft der Bogenscheitel jeder Bogenöffnung in einem Gitterstruktur-Seitenwandabschnitt, dessen Höhe beim Scheitel gleich oder geringer ist als die Stärke der Deckwand. Die Seitenwandabschnitte in den Scheitelbereichen der Bogenöffnungen erhöhen die Gestaltfestigkeit. Dennoch werden sehr große Bogenöffnungen gebildet.

Bei einer Ausführungsform sind die die Gestaltfestigkeit der Tischbeine erhöhenden Auskleidungen zumindest bereichsweise mit Durchgangsöffnungen ausgebildet, damit das Regenwasser auch durch die Tischbeine in die innenliegende freie Kammer eintreten bzw. daraus austreten kann.

Bei einer weiteren, zweckmäßigen Ausführungsform ist vor allem zur Erhöhung der Gestaltfestigkeit entlang der Ränder der Deckplatte ein Falz geformt, der durch Versteifungsstege konzentriert verfestigt ist. Diese Versteifungsstege sind zweckmäßig gerundet, damit das umhüllende Vlies nicht geknickt, sondern dort gut abgestützt wird, wo der verstärkte Falz an einer Außenseite des Versickerungsbauwerks zu liegen kommt.

Um auch unterseitig eine großflächige Abstützung des Versickerungsbauwerks zu erzielen, wird bei einer Ausführungsform der Versickerungskörper mit den Tischbeinen auf eine Gitterstruktur-Bodenplatte aufgesetzt, die, vorzugsweise, verzahnende Gegenaufnahmen für die Tischbeine oder deren Fortsätze aufweist. Auch die Grundplatte ist z.B. wasserdurchlässig gestaltet.

Alternativ können bei einer weiteren Ausführungsform mehrere seitlich aneinandergesetzte Versickerungskörper auf eine große gemeinsame Grundplatte aufgesetzt werden, oder auf eine aus mehreren Grundplattensegmenten zusammengesetzte Grundplatte, deren Segmente entweder eine Größe entsprechend dem jeweiligen Tisch hat oder sogar größer ist. Das Zusammenfügen der jeweils benötigten Grundplatte aus mehreren Segmenten erleichtert die Einbauarbeit. Zweckmäßig ist die Grundplatte an den Randseiten verkleidet. Diese Verkleidungen erhöhen die Gestaltfestigkeit und können, gegebenenfalls, Durchbrüche aufweisen, um den Ein- bzw. Austritt von Regenwasser zu gestatten. Auch können dort Befestigungselemente vorgesehen sein.

Zur Erhöhung der Gestaltfestigkeit kann die jeweilige Gitterstruktur-Grundplatte eine vertiefte Mulde aufweisen, die von den Aufsetzzonen für Tischbeine umgeben ist.

Zweckmäßig ist die Seitenlänge des quadratischen Tisches, der einen Typ eines Versickerungskörpers bildet, gleich der Schmalseitenlänge des rechteckigen Tisches, der einen anderen Typ des Versickerungskörpers bildet und beträgt die Längsseitenlänge des rechteckigen Tisches die doppelte Seitenlänge des quadratischen Tisches. Die Höhen der Tische sind zumindest in etwa gleich. Dies ermöglicht die wahlweise Kombination rechteckiger und quadratischer Tische, auch so, dass in einer Lage Versickerungskörper diese anders gruppiert sind (z.B. auf Lücke) wie in der darüberliegenden und/oder darunterliegenden Lage, um eine sehr tragfähige Struktur des Versickerungsbauwerks wie mit der Verzahnung in einem Ziegelmauerwerk zu erzielen.

Ausführungsformen des Erfindungsgegenstandes werden anhand der Zeichnungen erläutert. Es zeigen:
- Fig. 1: eine Perspektivansicht einer ersten Ausführungsform eines Versickerungskörpers,
- Fig. 2: den Versickerungskörper von Fig. 1 mit Zusatzteilen, die montagegerecht gezeigt bzw. montiert dargestellt sind,
- Fig. 3: eine weitere Ausführungsform eines Versickerungskörpers in Perspektivansicht,
- Fig. 4: eine nicht erfindungsgemäße Ausführungsform eines Versickerungskörpers,
- Fig. 5: den Versickerungskörper von Fig. 4, mit zusätzlichen montierbereit oder bei der Montage bzw. montiert gezeigten Zusatzteilen zu Erstellen eines Versickerungsbauwerks,
- Fig. 6: den Versickerungskörper von Fig. 3 mit montagebereit, teilmontiert oder vollständig montierten Zusatzteilen, entsprechend Fig. 3 oder 4,
- Fig. 7: eine Perspektivansicht eines im Bau befindlichen Versickerungsbauwerks, das aus Versickerungskörpern etwa der Fig. 1 mit den Zusatzteilen von Fig. 2 erstellt wird, und
- Fig. 8: eine Perspektivansicht eines im Bau befindlichen Versickerungsbauwerks, das aus den Ausführungsformen der Versickerungskörper mit den Zusatzbauteilen von Fig. 3 oder 4 erstellt wird.

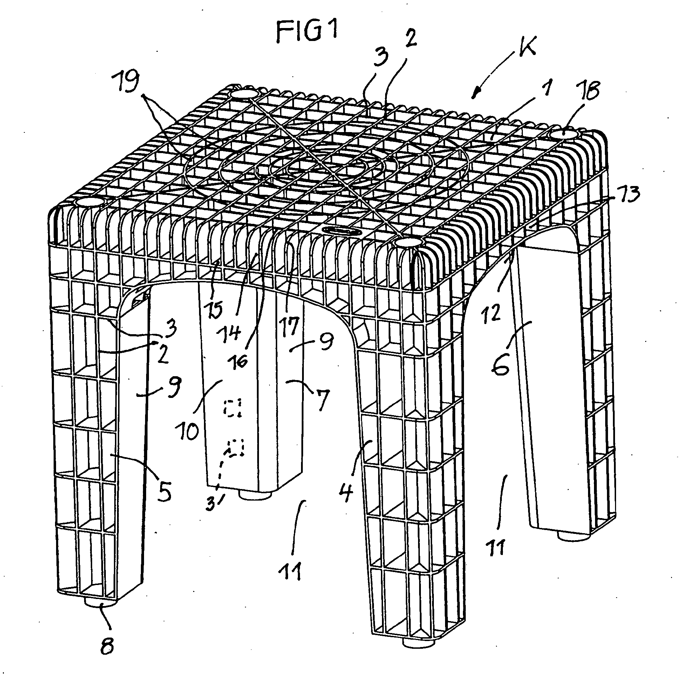

Ein Versickerungskörper K in Fig. 1 ist ein einstückiger Kunststoff-Spritzgussteil, vorzugsweise hergestellt mittels eines Backenwerkzeugs, und hat die Form eines annähernd quadratischen Tisches, dessen Höhe (z.B. etwa 0,4 bis 0,6 m) in etwa der Seitenlänge entspricht (Würfelform mit exakt senkrecht zueinander stehenden, ebenen Begrenzungsflächen). Eine Deckplatte 1 ist als Gitterstruktur mit Längs- und Querstegen 2, 3 ausgebildet. In der Gitterstruktur der Deckplatte 1 können Ausschneidemuster 19 eingeformt sein. Zumindest ein Großteil der Zwischenräume zwischen den Längs- und Querstegen 2, 3 (die hochkant stehen) bildet freie Durchgänge zu einem unterhalb der Tischplatte 1 liegenden freien Innenraum oder einer Innenkammer des Versickerungskörpers K. In den Eckbereichen der Deckplatte 1 sind oben Gegenaufnahmen 18 eingeformt. Von den vier Ecken der Deckplatte 1 erstrecken sich Tischbeine 4, 5, 6 und 7 senkrecht nach unten, die in Richtung zu ihren freien Enden konvergieren und zwischen sich jeweils paarweise eine nach unten offene Bogenöffnung 11 begrenzen. Die zu den Bogenöffnungen 11 weisenden bzw. zur innenliegenden Kammer weisenden Seiten der Tischbeine sind bei 9 und 10 ausgekleidet. Gegebenenfalls sind jedoch in den Auskleidungen 9, 10 Durchgangsöffnungen 3' geformt, die mit der Gitterstruktur der Tischbeine kommunizieren. An den freien Enden der Tischbeine sind Fortsätze 8 angeformt, die bei Aufeinandersetzen der Versickerungskörper K in die Gegenaufnahmen 18 eingesteckt werden. Der Scheitel 12 jeder Bogenöffnung 11 liegt in einem sich vom Rand der Deckplatte 1 nach unten erstreckenden Gitterstruktur-Seitenwandabschnitt 13, der in die beiden angrenzenden Tischbeine übergeführt ist. Entlang der Ränder der Deckplatte 1 ist ein L-förmiger Falz 14 geformt, dessen Falzbegrenzungswände 15 und 16 durch, z.B. zum Schutz einer umhüllenden Vlieslage, abgerundete Hochkantstege 17 verbunden sind, wobei die Dichte der Hochkantstege 17 größer ist als die Dichte der korrespondierenden Stege 2 bzw. 3 in der Gitterstruktur der Deckplatte 1. Die Spannweite jeder Bogenöffnung 11 ist größer als die Summe der Breitenerstreckungen der angrenzenden Tischbeine. Die Höhe des Seitenwandabschnittes 13 im Bereich des Scheitels 12 jeder Bogenöffnung 11 entspricht in etwa der Stärke der Deckplatte 1 oder ist sogar niedriger als diese.

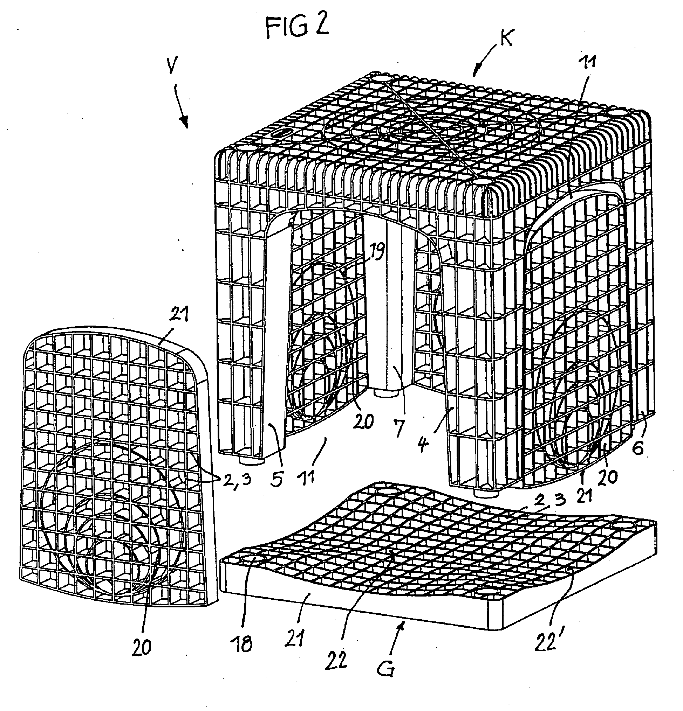

Um unter Verwendung des Versickerungskörpers K ein Versickerungsbauwerk V zu erstellen (Fig. 2), wird der Versickerungskörper K mit unterschiedlichen Zusatzteilen kombiniert. Bei der in Fig. 2 gezeigten Ausführungsform sind die Zusatzteile Gitterstruktur-Füllplatten 20, die in die Bogenöffnungen 11 passen, und eine Gitterstruktur-Grundplatte G, die hier der Größe der Deckplatte 1 entspricht. In der Gitterstruktur (Längs- und Querstege 2, 3) der Füllplatten 20 können Ausschneidemuster 19 eingeformt sein. Die Grundplatte G, deren Umfangsrand, wie auch der Umfangsrand der Füllplatten, mit einer Verkleidung 21 versehen ist, weisen Gegenaufnahmen 18 für die Fortsätze 8 der Tischbeinenden auf. Die Oberseite 22 der Gitterstruktur der Grundplatte G ist so ausgebildet, dass zwischen den Gegenaufnahmen 18 bzw. den Aufstandszonen für Tischbeine eine vertiefte Mulde geformt wird, die sich bis zum Außenumfang erstreckt (bei 22' angedeutet).

Mittels der Füllplatten 20 können sämtliche Bogenöffnungen 11 des Versickerungskörpers K ausgefüllt werden, wobei die unteren Randbereiche der Füllplatten 20 zur Muldenform der Grundplatte G passen. Alternativ kann jedoch auch die eine oder andere Bogenöffnung 11 freigelassen werden, beispielsweise um einen Zugang zur innenliegenden Kammer (zur Inspektion oder Reinigung) freizuhalten. Ferner ist es möglich, in einem Versickerungsbauwerk nachträglich zur Reinigung oder Inspektion eine Füllplatte 20 oder mehrere Füllplatten zu entnehmen. Die Füllplatten 20 sind mit geeigneten Mitteln an den Tischbeinen bzw. dem Versickerungskörper K festgelegt. Hierfür eignen sich entweder Verbindungselemente oder Rastverbindungen oder dgl.. Um Rohre anschließen zu können, kann das jeweilige Ausschneidemuster bedarfsgerecht ausgeschnitten werden, und zwar vor dem Einsetzen der jeweiligen Füllplatte oder bei bereits eingesetzter Füllplatte 20.

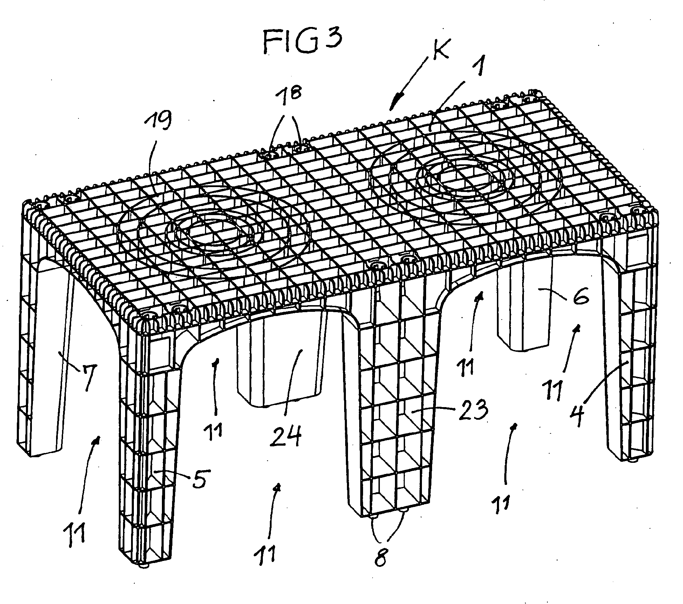

Fig. 3 zeigt eine weitere Ausführungsform eines Versickerungskörpers K, der die Form eines rechteckigen Tisches (z.B. Länge ca. 1,2 m, Breite ca. 0,6 m) mit sechs Tischbeinen 4, 5, 6, 7 und 23 und 24 hat. Die ebenen Außenseiten sind senkrecht zur Deckplatte 1. Die Schmalseitenlänge des Rechtecks stimmt, vorzugsweise, mit der Seitenlänge des Quadrats der Ausführungsform der Fig. 1 und 2 überein. Die Längsseitenlänge des Rechtecks beträgt, vorzugsweise, die doppelte Seitenlänge der Schmalseite. In der Deckplatte 1 sind, beispielsweise, die Gegenaufnahmen 18 jeweils doppelt vorgesehen. Die zwei zusätzlichen Tischbeine 23, 24 sind in etwa unter den Längsmitten der Längsseiten des Rechtecks an den Rändern der Deckplatte 1 angeformt und doppelt so breit wie die an den Ecken angeordneten Tischbeine. Alle Tischbeine haben eine Gitterstruktur und konvergieren zu ihren freien Enden. An den mittleren Tischbeinen 23, 24 können jeweils zwei Fortsätze 8 angeformt sein. Auch die mittleren Tischbeine 23, 24 sind innenseitig und zu den Bogenöffnungen 11 ausgekleidet. Die Höhe (z.B. 0,4 m bis 0,6 m) des Versickerungskörpers K in Fig. 3 kann der Höhe des Versickerungskörpers K der Fig. 1 und 2 entsprechen. Der Versickerungskörper K in Fig. 3 kann mit denselben Zubehörteilen ergänzt werden, wie der Versickerungskörper K in Fig. 1 (Gleichteile).

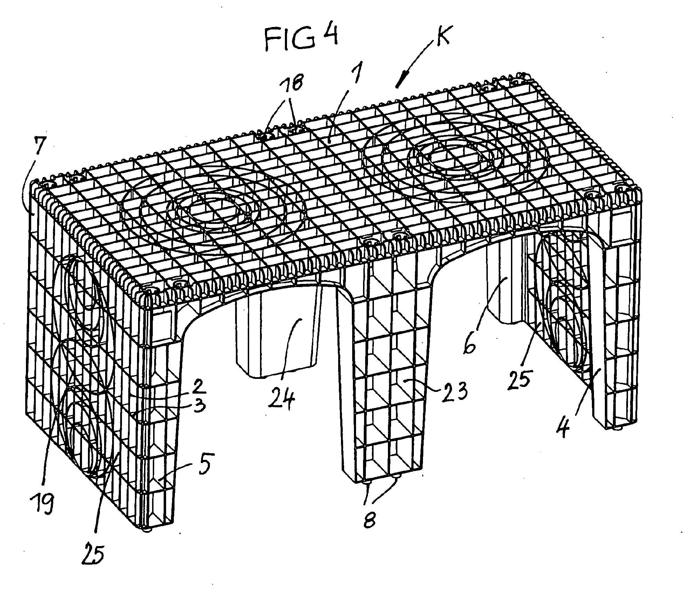

Fig. 4 zeigteinen Versickerungskörpers K. An den Rechteckschmalseiten ist der Zwischenraum zwischen den dortigen Tischbeinen 4, 6 und 5, 7 durch Gitterstruktur-Seitenwandabschnitte 25 vollständig ausgefüllt. D.h., die Seitenwandabschnitte 25 und die jeweiligen Tischbeine sind gemeinsam geformt. In den Seitenwandabschnitten 25 können Ausschneidemuster 19 in die Gitterstruktur 2,3 integriert sein. Der weitere Aufbau des Versickerungskörpers K entspricht dem der Versickerungskörper der Fig. 1 bis 3.

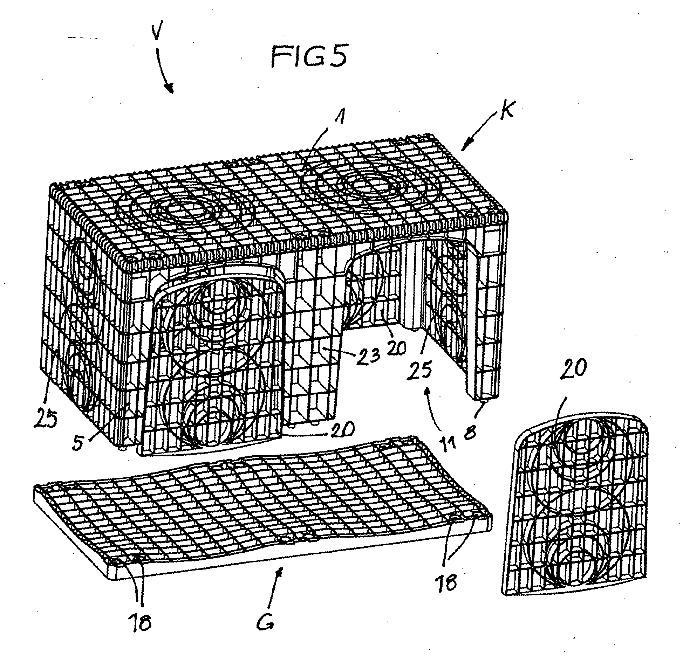

In Fig. 5 ist zur Erstellung eines Versickerungsbauwerks V der Versickerungskörper K der Fig. 4 mit Zubehörteilen kombiniert. Die Zubehörteile sind die bereits erläuterten Füllplatten 20, die wahlweise die Bogenöffnungen 11 verschließen und zwischen jeweils ein Paar Tischbeine eingepasst werden. Der Versickerungskörper K wird auf eine Gitterstruktur-Grundplatte G aufgesetzt, die mit entsprechenden Gegenaufnahmen 18 für die Fortsätze 8 der Tischbeine geformt ist und die Muldenform besitzt, die zu den unteren Randbereichen der Füllplatten 20 passt. Die Grundplatte G hat hier eine Größe entsprechend der Deckplatte 1.

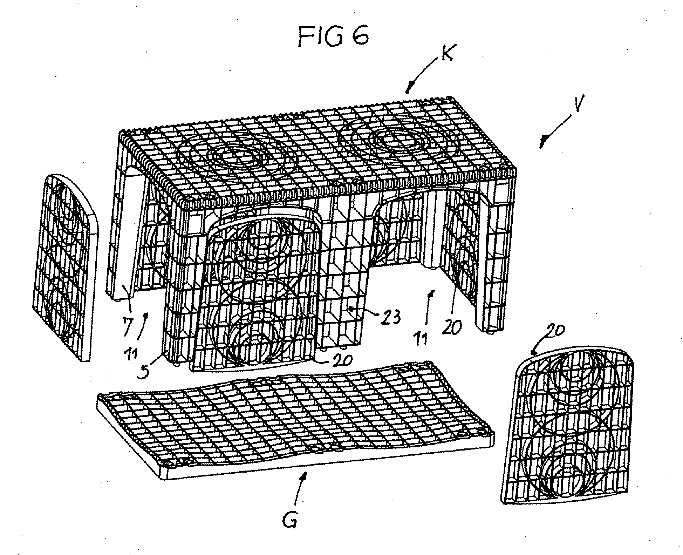

In Fig. 6 wird unter Verwendung des Versickerungskörpers K der Fig. 3 ein Versickerungsbauwerk V erstellt. Von den Bogenöffnungen 11 werden bedarfsweise diejenigen durch Füllplatten 20 verschlossen, die im Bauwerk nicht offen bleiben sollen. Ferner wird der Versickerungskörper K auf eine Gitterstruktur-Grundplatte G aufgesetzt, deren Größe der Deckplatte entspricht.

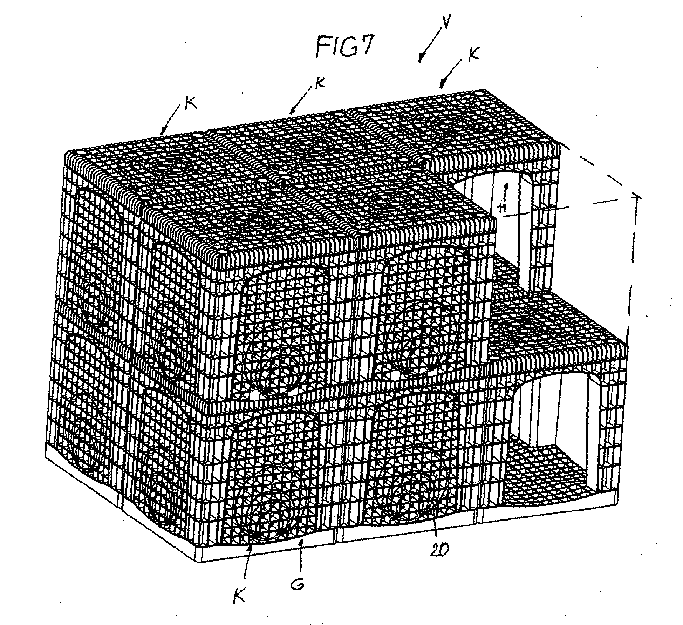

Fig. 7 zeigt eine Perspektivansicht eines Versickerungsbauwerks V aus den Versickerungskörpern der Fig. 1 und 2 und deren Zubehörteilen. Auf eine untere Lage aus mehreren, auf Grundplatten G aufgesetzten, z.B. miteinander gekuppelten Versickerungskörpern K ist direkt auf deren Deckplatten 1 eine obere Lage aus den gleichen, ebenfalls gekuppelten Versickerungskörpem K aufgesetzt. Wo gewünscht, werden die Bogenöffnungen 11 durch die Füllplatten 20 ausgefüllt. Die Grundplatten G werden, vorzugsweise, untereinander fest verbunden, wie in jeder Lage, gegebenenfalls auch die Versickerungskörper K. Die im Versickerungsbauwerk V innenliegenden Bogenöffnungen könnten frei bleiben, um einen direkten Zusammenhang zwischen den einzelnen innenliegenden Kammern der Versickerungskörper K zu bilden. Aus Gründen der Gestaltfestigkeit könnten jedoch einige oder sämtliche innenliegenden Bogenöffnungen 11 mit Füllplatten 20 versehen werden, falls dies für wünschenswert gehalten wird. Die Breite des Versickerungsbauwerks V setzt sich hier aus zwei nebeneinanderliegenden Versickerungskörpern K zusammen, während seine Länge der Länge von drei Versickerungskörpern K entspricht. Die Größe des Versickerungsbauwerks K kann jedoch in jeder Richtung (Höhenrichtung und Seitenrichtung) größer oder kleiner sein als gezeigt.

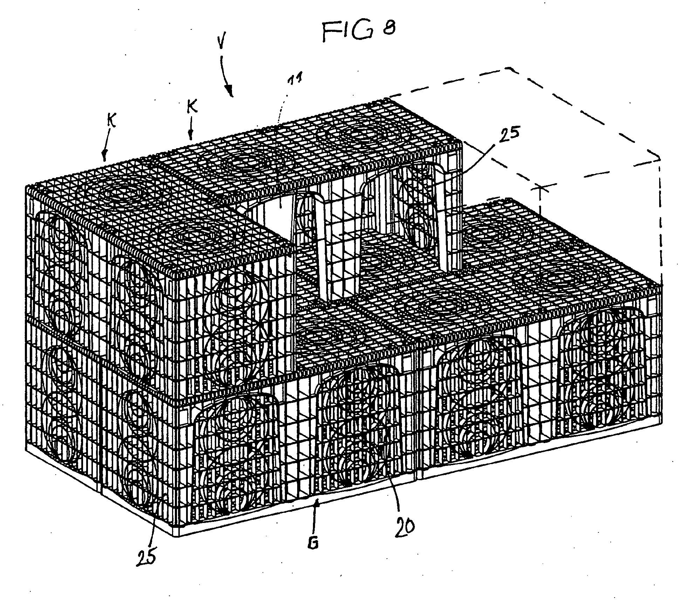

Fig. 8 verdeutlicht ein Versickerungsbauwerk V, das aus den Versickerungskörpern der Fig. 3 oder 4 erstellt wird. Eine untere Lage aus auf Grundplatten G aufgesetzten Versickerungskörpern K dient mit ihren Deckplatten direkt zum Aufsetzen einer oberen Lage ebenfalls aus Versickerungskörpern K. Dabei sind die Versickerungskörper in der unteren Lage gegenüber denen in der oberen Lage versetzt angeordnet, so dass sich eine Art Ziegelverbund ergibt. D.h., in der unteren Lage erstrecken sich die Rechtecke mit ihren längeren Seiten in Längsrichtung, während in der oberen Lage die zwei äußersten Versickerungskörper K mit der Längsrichtung ihrer Rechtecke quergesetzt sind, während dazwischen zwei Versickerungskörper längsliegend und auf "Lücke" aufgesetzt sind. Dies bedeutet, dass jeweils ein oberer Versickerungskörper zwei Teilabschnitte zweier darunterliegender Versickerungskörper K übergreift und auf diese Weise mittels der Fortsätze 8 die Fugen zwischen den unteren Versickerungskörpern überbrückt bzw. diese zusammenhält. Im Inneren des Versickerungsbauwerks V liegende Bogenöffnungen 11 bleiben entweder frei oder sind aus Stabilitätsgründen ebenfalls durch Füllplatten 20 ausgefüllt. An den Außenseiten des Versickerungsbauwerks V können die einstückig integrierten Seitenwandabschnitte 25 vorgesehen sein. Um Rohrleitungen anschließen zu können, lassen sich die vorgeformten Ausschneidemuster entsprechend ausschneiden.

Jedes der gezeigten Versickerungsbauwerke V wird dann in zumindest eine Lage eines Vlieses eingehüllt, das gegebenenfalls durch eine Schutzabdeckung umgeben wird, ehe das unterirdische Versickerungsbauwerk mit Erdreich bedeckt wird.

Zum Reinigen und/oder Inspizieren wird das Versickerungsbauwerk an zumindest einer Stelle freigelegt, so dass dann nach Entnahme der gewünschten Füllplatte 20 Zugang zum Inneren des Versickerungsbauwerks möglich ist und Verschmutzungen beseitigt bzw. das umhüllende Vlies von innen her durch die Gitterstruktur der Begrenzungswände des Versickerungsbauwerks gereinigt werden kann.

Die Versickerungskörper K der Fig. 1 bis 4 könnten innerhalb desselben Versickerungsbauwerks auch wahlweise kombiniert werden, vorausgesetzt, dass die Seitenlänge des quadratischen Tisches der Schmalseitenlänge des rechteckigen Tisches entspricht, und die Längsseitenlänge des rechteckigen Tisches der doppelten Seitenlänge des quadratischen Tisches entspricht, wobei die jeweiligen Tischhöhen gleich sind. Diese Dimensionierung ist jedoch keine Notwendigkeit. Es könnten die unterschiedlichen Ausführungsformen der Versickerungskörper auch voneinander verschieden so dimensioniert sein, dass sie nicht innerhalb desselben Versickerungsbauwerks miteinander kombinierbar sind.

Kern der Erfindung ist es, die Versickerungskörper jeweils mit der Gestalt eines Tisches zu gestalten, um mit minimalem Materialaufwand optimale Gestaltfestigkeit und einen optimal großen Innenraum in jedem Versickerungskörper zu erzielen. Ferner werden aufeinandergesetzte Lagen ohne Zwischenplatten eingebaut, weil die Deckplatte jedes unteren Tisches gleichzeitig die Grundplatte für den daraufstehenden Tisch bildet. Jeder Versickerungskörper ist mit mindestens vier Bogenöffnungen ausgebildet, die nach Bedarf nachträglich verschlossen werden können, beispielsweise um genügend Auflagefläche für die umhüllende Vlieslage zu bilden, dennoch aber die Möglichkeit eröffnen, einzelne Kammern der Versickerungskörper miteinander direkt kommunizieren zu lassen. Die Versickerungskörper K sind bequem handhabbar, da sie geringes Gewicht und handliche Abmessungen haben, sich zur Lagerhaltung bzw. zum Transport ineinandersetzen oder die Zusatzteile platzsparend unterbringen lassen. Dennoch lässt sich durch Verwenden der Zusatzteile letztendlich ein nahezu monolithisches Versickerungsbauwerk V erstellen, dessen Aufnahmekapazität ca 95 % oder mehr des umbauten Raums beträgt. Das Versickerungsbauwerk V lässt sich durchaus so gestalten, dass es in eingebautem Zustand von Personenkraftwagen und auch Lastkraftwagen überfahrbar ist.

## Patentansprüche

1. Versickerungskörper (K) aus Kunststoff, der zum Erstellen eines unterirdischen Versickerungsbauwerks (V) als in Einbaulage nach unten offener, quaderförmiger Korb mit der Form eines Tisches ausgebildet ist und eine ebene Gitterstruktur-Deckwand (1) und von der Deckwand (1) nach unten strebende Gitterstruktur-Seitenwandabschnitte (13) und Tischbeine (4, 5, 6, 7; 23; 24) mit annähernd quadratischen oder rechteckigen Außenquerschnitten aufweist, die eine innen liegende, nach unten offene Kammer und Bogenöffnungen (11) begrenzen, **dadurch gekennzeichnet, dass** der Versickerungskörper (K) als quadratischer Tisch mit separaten Tischbeinen (4, 5, 6, 7) unter den vier Tischecken oder als rechteckiger Tisch mit separaten Tischbeinen (4, 5, 6, 7) unter den vier Tischecken und zwei Tischbeinen (23, 24) unter den Längsmitten der Rechtecklängsseiten ausgebildet ist, dass die Tischbeine als Gitterstrukturen ausgebildet sind und im Versickerungskörper (K) an allen vier Außenseiten in etwa gleich große, nach unten bis zu den Tischbeinenden offene Bogenöffnungen (11) begrenzen, deren Spannweite jeweils größer ist als die Summe der Außenquerschnittsbreiten der Tischbeine des begrenzenden Tischbeinpaares, dass die Tischbeinseiten in den Bogenöffnungen (11) und in der innen liegenden Kammer ausgekleidet sind, und dass in zumindest eine er Bogenöffnungen (11) eine an Randseiten verkleidete und dort mit Schnappelementen oder Befestigungselementen zum lösbaren Festlegen in der Bogenöffnung (11) ausgebildete Gitterstruktur-Füllplatte (20) nachträglich eingesetzt ist, die die Bogenöffnung (11) von einem Bogenscheitel (12) bis nach unten zu den Tischbeinenden ausfüllt.

2. Versickerungskörper nach Anspruch 1, **dadurch gekennzeichnet, dass** die Tischbeine (23, 24) des rechteckigen Tisches unter den Längsmitten der Rechtecklängsseiten in etwa doppelt so breit sind wie die Tischbeine (4, 5, 6, 7) unter den Ecken.

3. Versickerungskörper nach Anspruch 1, **dadurch gekennzeichnet, dass** der Bogenscheitel (12) jeder Bogenöffnung (11) in einem zwischen dem begrenzenden Tischbeinpaar entlang des Randes der Deckwand (1) geformten Gitterstruktur-Seitenwandabschnitt (12) verläuft, dessen Höhe beim Bogenscheitel (12) in etwa gleich oder niedriger ist als die Stärke der Deckwand (1).

4. Versickerungskörper nach Anspruch 1, **dadurch gekennzeichnet, dass** in den Tischbeinseiten-Auskleidungen (9, 10) zumindest bereichsweise mit der Gitterstruktur (2, 3) kommunizierende Durchgangsöffnungen (3') geformt sind.

5. Versickerungskörper nach Anspruch 1, **dadurch gekennzeichnet, dass** entlang der Ränder der Deckplatte (1) durchgehend ein nach außen offener, annähernd rechtwinkliger L-Falz (14) geformt ist, dessen Falzwände (15, 16) miteinander durch Versteifungsstege (17) in einer gegenüber der Gitterstruktur (2, 3) der Deckplatte dichteren Steganordnung verbunden sind.

6. Versickerungskörper nach Anspruch 1, **dadurch gekennzeichnet, dass** der Versickerungskörper (K) mit den Tischbeinenden auf eine zumindest mit der Größe und Form der Deckplatte (1) ausgebildete Gitterstruktur-Bodenplatte (G) aufsetzbar ist, die in Eckbereichen bzw. Aufsetzzonen Gegenaufnahmen (18) für Tischbeine oder die Fortsätze (8) aufweist.

7. Versickerungskörper nach Anspruch 1, **dadurch gekennzeichnet, dass** mehrere seitlich aneinandergesetzte, vorzugsweise gekuppelte, Versickerungskörper (K) entweder auf eine gemeinsame größere oder auf eine aus mehreren jeweils größer als eine Deckplatte (1) ausgebildete Grundplatten-Segmenten zusammengesetzte Grundplatte (G) aufstellbar sind.

8. Versickerungskörper nach Anspruch 6 und 7, **dadurch gekennzeichnet, dass** in der Oberseite (22) der Gitterstruktur-Grundplatte (G) zumindest eine gegenüber den Aufsetzzonen (18) für Tischbeine vertiefte Mulde (22') geformt ist.

9. Versickerungskörper nach Anspruch 1, **dadurch gekennzeichnet, dass** die Seitenlänge des quadratischen Tisches der Schmalseitenlänge des rechteckigen Tisches und die Längsseitenlänge des rechteckigen Tisches der doppelten Seitenlänge des quadratischen Tisches entsprechen, und dass die Tische zumindest in etwa gleich hoch sind.

## Claims

1. Plastic infiltration body (K) formed as a downwardly open quadruple-shaped basket in the form of a table for constructing a subterranean infiltration building (V) [in mounted position], the basket having a planar grid structure top wall (1) and grid structure side wall sections (13) extending downwardly from the top wall (1) and table legs (4, 5, 6, 7; 23; 24) of substantially square or rectangular outer cross-section, the table legs bounding an interiorly located downwardly open open chamber and arc-shaped openings (11), **characterised in that** the infiltration body (K) is formed as a square table having separated table legs (4, 5, 6, 7) below the four table corners or as rectangular table having separated table legs (4, 5, 6, 7) below the four table corners and having two table legs (23, 24) below the longitudinal centres of the longer sides of the rectangle, that the table legs are formed as grid structures and bound in the infiltration body (K) substantially equally dimensioned arc openings (11) at all four outer sides which arc openings (11) are open downwardly to the ends of the table legs, the width of the arc openings (11) respectively being larger than the sum of the width of the outer cross-sections of the table legs of the table leg pair bounding the arc opening (11), that the sides of the table legs are lined inside of the arc openings (11) and in the interiorly located chamber, and that in at least one of the arc openings (11) a grid structure filling plate (20) is inserted later which has snap elements or fastening elements for releasably fixing the filling plate in the arc opening (11), the filling plate filling the arc opening (11) from crown of the arc (12) and downwardly to the ends of the table legs.

2. Infiltration body according to claim 1, **characterised in that** the table legs (23, 24) arranged below the longitudinal centres of the longer sides of the rectangular table are substantially double as broad as the table legs (4, 5, 6, 7) located below the table corners.

3. Infiltration body according to claim 1, **characterised in that** the crown of the arc (12) of each arc opening (11) extends in a grid structure side wall section (12) formed between the pair of bounding table legs along the edge of the top wall (1), the height of the side wall section (12) at the crown of the arc (12) being substantially equal or lower than the thickness of the top wall (1).

4. Infiltration body according to claim 1, **characterised in that** through openings (3') are formed in the linings (9, 10) of the sides of the table legs, the through (3') at least partially communicating with the grid structure (2, 3).

5. Infiltration body according to claim 1, **characterised in that** a substantially right angled (L) L-rabbet (14) is formed along the edges of the top plate (1), the L-rabbet (14) extending continuously and being open to the outer sides, the rabbeted walls (15, 16) of which are interconnected with one another by stiffening webs (17) in a web arrangement which is denser than the grid structure (2, 3) of the top plate.

6. Infiltration body according to claim 1, **characterised in that** the infiltration body (K) can be put with the ends of the table legs on a grid structure bottom plate (G) formed at least with the dimension and form of the cover plate (1), the grid structure bottom plate (G) being provided in corner regions or abutment zones counter sockets (18) for the table legs or for protrusions (8) of the table legs.

7. Infiltration body according to claim 1, **characterised in that** several infiltration bodies (K) which are put to each other side by side and, preferably, are coupled with each other, can be put either on a common larger bottom plate (G) or on a bottom plate (G) combined from bottom plate segments each of which being larger than a top plate (1).

8. Infiltration body according to claim 6 and claim 7, **characterised in that** at least one depression (22') is formed in the topside (22) of the grid structure bottom plate (G), the depression (22') being depressed in relation to the attachment zones (18) for table legs.

9. Infiltration body according to claim 1, **characterised in that** the length of the sides of the square table corresponds with the length of the smaller side of the rectangular table, and that the length of the longer side of the rectangular table corresponds with the doubled length of the sides of the square table, and that the tables at least substantially have the same heights.

## Revendications

1. Corps d'infiltration (K) en matière plastique qui, pour la réalisation d'un ouvrage d'infiltration souterrain (V), est conçu comme une corbeille parallélipipédique ouverte vers le bas, en position installée, et en forme de table, et qui présente une paroi supérieure plane à structure en treillis (1), des parties de parois latérales à structure en treillis (13) qui sont dirigées vers le bas à partir de ladite paroi supérieure (1), et des pieds (4, 5, 6, 7 ; 23 ; 24) avec des sections transversales extérieures approximativement carrées ou rectangulaires qui délimitent une chambre intérieure ouverte vers le bas et des ouvertures arquées (11), **caractérisé en ce que** le corps d'infiltration (K) est conçu comme une table carrée avec des pieds séparés (4, 5, 6, 7) sous ses quatre coins, ou comme une table rectangulaire avec des pieds séparés (4, 5, 6, 7) sous ses quatre coins et deux pieds (23, 24) sous les centres longitudinaux des grands côtés, **en ce que** les pieds sont conçus comme des structures en treillis et délimitent dans le corps d'infiltration (K) des ouvertures arquées (11) qui ont à peu près la même taille sur tous les quatre côtés extérieurs, qui sont ouvertes vers le bas jusqu'aux extrémités des pieds et dont la largeur est supérieure à la somme des largeurs en section transversale extérieure des pieds de chaque paire de pieds, **en ce que** les côtés des pieds situés dans les ouvertures arquées (11) et dans la chambre intérieure sont revêtus, et **en ce qu'**il est prévu, introduite par la suite dans l'une au moins des ouvertures arquées (11), une plaque de remplissage à structure en treillis (20) qui est revêtue sur ses bords, qui présente à cet endroit des éléments d'encliquetage ou des éléments de fixation pour être immobilisée de manière amovible dans l'ouverture arquée (11), et qui remplit ladite ouverture arquée (11) d'un sommet (12) jusqu'en bas des extrémités des pieds.

2. Corps d'infiltration selon la revendication 1, **caractérisé en ce que** les pieds (23, 24) de la table rectangulaire situés sous les centres longitudinaux des grands côtés sont à peu près deux fois plus larges que les pieds (4, 5, 6, 7) situés sous les coins.

3. Corps d'infiltration selon la revendication 1, **caractérisé en ce que** le sommet (12) de chaque ouverture arquée (11) s'étend dans une partie de paroi latérale à structure en treillis (13) qui est formée entre les pieds d'une paire de pieds de délimitation, le long du bord de la paroi supérieure (1), et dont la hauteur au niveau du sommet (12) est à peu près égale ou inférieure à l'épaisseur de ladite paroi supérieure (1).

4. Corps d'infiltration selon la revendication 1, **caractérisé en ce que** des ouvertures de passage (3') qui communiquent au moins par zones avec la structure en treillis (2, 3) sont formées dans les revêtements (9, 10) des côtés des pieds.

5. Corps d'infiltration selon la revendication 1, **caractérisé en ce qu'**il est prévu, formée tout le long des bords de la plaque supérieure (1), une rainure en L (14) ouverte vers l'extérieur, approximativement à angle droit, dont les parois (15, 16) sont reliées entre elles par des nervures de renforcement (17), avec une disposition de nervures plus dense par rapport à la structure en treillis (2, 3) de ladite plaque supérieure.

6. Corps d'infiltration selon la revendication 1, **caractérisé en ce qu'**il est apte à être posé avec les extrémités de ses pieds sur une plaque inférieure à structure en treillis (G) qui a au moins la taille et la forme de la plaque supérieure (1) et qui présente dans ses zones d'angle ou dans ses zones d'appui des logements opposés (18) pour les pieds ou pour les prolongements (8).

7. Corps d'infiltration selon la revendication 1, **caractérisé en ce que** plusieurs corps d'infiltration (K) juxtaposés, de préférence accouplés, sont aptes à être posés soit sur une plaque de base (G) commune plus grande, soit sur une plaque de base (G) composée de plusieurs segments de plaque de base plus grands, chacun, qu'une plaque supérieure (1).

8. Corps d'infiltration selon les revendications 6 et 7, **caractérisé en ce qu'**il est prévu, formée dans le côté supérieur (22) de la plaque de base à structure en treillis (G), au moins une cuvette (22') creusée par rapport aux zones d'appui (18) pour les pieds.

9. Corps d'infiltration selon la revendication 1, **caractérisé en ce que** la longueur latérale de la table carrée correspond à la longueur du petit côté de la table rectangulaire et la longueur du grand côté de la table rectangulaire correspond au double de la longueur latérale de la table carrée, et **en ce que** les tables ont à peu près la même hauteur.
